# EUROPEAN PATENT APPLICATION

(11) **EP 4 701 203 A1**
(43) Date of publication of application: **25.02.2026**
(21) Application number: 25197561.1
(22) Date of filing: 22.08.2025
(51) Int. Cl.: H04N 21/254, H04N 21/258, H04N 21/442, H04N 21/658, H04N 21/8358, H04N 21/845

(54) **SYSTEM AND METHOD FOR PROVIDING REAL-TIME FORENSIC WATERMARKING USING EDGE COMPUTING IN A LIVE STREAMING ENVIRONMENT**

(30) Priority: 23.08.2024 KR 20240113475
(71) Applicant: DoveRunner Inc., Seoul 06109 (KR)
(72) Inventor: KIM, Dae-Soo, 42251 Daegu (KR); PARK, Byeong-Sun, 16701 Suwon-si (KR); PARK, Sang-Ho, 12764 Gwangju-si (KR); KIM, Hyeon-Jun, 02154 Seoul (KR); SEO, Woo-Seok, 06196 Seoul (KR)
(74) Representative: Jacobacci Coralis Harle

(57) **Abstract**

The present invention provides a system and a method for providing real-time forensic watermarking using edge computing in a live streaming environment. The pre-processing device receives original segments of multimedia content, inserts an A watermark and a B watermark according to the A/B watermarking scheme into each original segment, and generate an A content and a B content. Herein, every segment at the cyclic Nth positions of both the A content and the B content is retained as the original segment. The edge device generates a W watermark using predetermined session information, inserts the W watermark into the original segment at the cyclic Nth positions, and encodes it into a W segment. The CDN device transmits the A segment or the B segment according to the order determined by the A/B watermarking scheme for the 1st to (N-1)th segments, and transmits the W segment for the Nth segment.

## Description

### Technical field of the invention

The present invention relates to a system for providing real-time forensic watermarking using edge computing in a live streaming environment and a method for providing real-time forensic watermarking using said system.

### State of the art

There are three most common forensic watermarking methods: bitstream modification, client-side watermarking, and A/B watermarking.

Bitstream modification method comprises a processing for modifying selected areas of images or frames within a range that does not distort the original, so that users and sessions may be identified by means of the frames.

Client-side watermarking method is a method using client devices and is generally preferred and widely used due to its ease of distribution for multi-platform support, fast watermark extraction, low system cost, and low complexity.

Meanwhile, A/B watermarking scheme is primarily used in OTT and VoD services, unlike other watermarking schemes. In the A/B watermarking scheme, the original video is encoded into one video into which a watermark of type A is inserted and the other video into which a watermark of type B is inserted, to generate two video contents. The generated two video contents are divided into DASH or HLS segments and stored in a storage device for streaming.

Then a transmission request for the video content occurs, session information, which may be a user ID, is converted into binary data, and the video content is transmitted by combining the segments into which the watermark of type A is inserted and the segments into which the watermark of type B is inserted in an order uniquely determined according to the watermark payload related to the converted binary data.

If the transmitted video content is illegally distributed, the sequence of the combined segments (those into which the type A watermark is inserted and those into which the type B watermark is inserted) can be read to identify the distributor.

U.S. Patent No. 11,303,975 B2 (April 12, 2022) discloses an implementation example of the aforementioned A/B watermarking scheme.

### Description of the invention

The present invention is not intended to propose a new forensic watermarking method but aims to provide a watermarking method that maintains the advantages of the existing A/B watermarking scheme in the VOD streaming environment while overcoming the problem of vulnerability to collusion attacks inherent in the existing A/B watermarking scheme.

### 1. Object of the Invention

The A/B watermarking scheme is a method in which forensic watermarking content is prepared in advance through a preprocessing step, and when a user request occurs, a unique value is generated by combining A and B and then transmitted. This method is efficient in services such as OTT, where a large number of users access the service simultaneously. However, this method is vulnerable to collusion attacks. Even without knowing how the segments were mixed, if segments are taken one by one from multiple contents generated with different IDs and reshuffled, the inserted A/B combination is destroyed, making it impossible to determine the source of leakage.

As a method for defending against such collusion attacks, an approach that enables user information to be extracted from a single frame is required. However, since inserting user information into a video frame requires an encoding process with high computational load, transmission delay may occur when the video must be delivered to the user in real time. Also, the computational resources used for encoding are needed proportionally with the number of users requesting the video.

Therefore, the present invention proposes an improved forensic watermarking providing system and method that may resist collusion attacks without incurring significant costs by improving the existing A/B forensic watermarking scheme.

### 2. Summary of the Invention

When a VOD file for streaming is input in a cloud environment, an A/B Generator (hereinafter referred to as "preprocessing device') generates HLS or DASH segment files with a watermark of type A and a watermark of type B inserted and stores them in a storage device. In this case, the A/B watermarks are not inserted into all frames of every segment, and each segment at every cyclic Nth position in the repeating sequence is retained as an original segment without the insertion of A/B watermarks. When a user device requests VOD playback, the CDN (content delivery network) receives and processes the request. Upon receiving the request from the user device, the CDN requests the manifest of the initial playback file. At this time, the CDN activates the edge device, the edge device generates a W watermark using the session information received from the CDN. The edge device retrieves a segment at Nth position from the storage device and inserts into it the W watermark containing the session information.

The CDN transmits to the user device the segments from the 1st to the (N-1)th, which are generated by combining either A segments or B segments in the order according to the session, and then when transmitting the Nth segment, the CDN transmits a W segment generated by the edge device to the user

Continuously, the edge device retrieves a segment at next Nth position from the storage device, inserts the W watermark into it, and encodes it into a next W segment. The CDN then transmits a combination of A/B segments for the next 1st to (N-1)th segments, and transmits the next W segment for the next Nth segment. This repetition continues until the user finishes playback.

### 3. Features of the Invention

Since the method proposed by the present invention utilizes the existing A/B forensic watermarking scheme as is, the method ensures real-time performance in a VOD streaming environment and has the advantage of combining information of various users with a single encoding. At the same time, the method may resist collusion attacks, which are drawbacks of the existing A/B forensic watermarking scheme. That is, even if some frames of the video into which forensic watermarking is applied are leaked, the original distributor may be identified as long as the W watermark is detected.

Meanwhile, in order to insert all information into every segment in real time using edge computing, high-performance edge computing is required, which leads to an increase in system construction costs. However, the method according to the present invention, in which the W watermark containing user information is inserted only into each segment at every cyclic Nth position, may guarantee enough time to insert the watermark using edge computing during the period in which the 1st to (N-1)th segments are being processed from the initial request. Therefore, the real-time forensic watermarking providing method may be implemented even with a low-cost and low-performance edge device.

Additionally, since the insertion time of the W watermark may be controlled by changing the value of N, even low-performance edge devices may use processing methods such as DCT, DWT, and DTCWT that require computations in the frequency domain. For instance, when N is small, the edge device may use spatial domain-based watermarking methods with low computational load, and when N is sufficiently large, the edge device may use frequency domain-based watermarking methods that require a high computational load.

Most real-time watermark insertion processes require a large amount of computation because they involve decoding, watermark computation, and encoding. Accordingly, in order to process watermarking in real time, it is necessary to reduce the computational load, and for this reason, watermarking schemes determined by the spatial domain have mainly been used. However, according to the method proposed in the present invention, since the N-value, which indicates the position of the segment to which the watermark is applied, may be adjusted, the edge device may use various watermarking schemes regardless of the computational load.

### 4. Means for Solving the Problem

The real-time forensic watermarking providing system using edge computing in a live streaming environment according to the present invention, which comprises said features, is configured as follows.

A preprocessing device receives original multimedia content segments, inserts a watermark of type A or a watermark of type B according to the A/B watermarking scheme into each segment, and configures an A content consisting of only A segments and a B content consisting of only B segments. Here, in both the A content and the B content, each segment at every cyclic Nth position is retained as the original segment.

A storage device stores the A content and the B content.

An edge device generates a W watermark that enables identification of the user device based on predetermined session information, retrieves each original segment at every cyclic Nth position from the storage device, and inserts the W watermark into the retrieved original segments at cyclic Nth positions to encode them into W segments.

The CDN device, upon receiving a transmission request for the multimedia content from the user device, provides the session information of the user device to the edge device, for the 1st to (N-1)th segments, retrieves and transmits either the A segment or the B segment from the storage device according to the order determined by the A/B watermarking scheme, and for the Nth segment, retrieves and transmits the W segment from the edge device.

A user device provides the transmission request for the multimedia content to the CDN device, and executes the multimedia content composed of the segments transmitted from the CDN device.

Here, the value N is determined by referring to the watermark encoding performance of at least some edge devices in the multimedia content distribution network and may be shared by the preprocessing device, the CDN device, and the edge device.

Further, the multimedia content includes video content composed of frames, and one segment includes frames corresponding to 1 to 3 seconds of the video content. The number of frames constituting the A segment, the number of frames constituting the B segment, and the number of frames constituting the W segment may be identical to each other.

Also, the W watermark may be configured so that session information of the user device may be identified by means of any one frame included in the W segment.

Moreover, the W watermark transmitted every Nth time may include information related to the order of A segments and B segments at the 1st to the (N-1)th positions.

A method for providing a real-time forensic watermarking using edge computing in a live streaming environment, performed by the real-time forensic watermarking providing system according to the present invention, may comprise the steps of:
by a pre-processing device, receiving original segments of multimedia content, inserting an A watermark according to an A/B watermarking scheme into each of the original segments, generating an A content composed of only A segments into which the A watermark is inserted, inserting a B watermark according to the A/B watermarking scheme into each of the original segments, and generating a B content composed of only B segments into which the B watermark is inserted, wherein, each segment at every cyclic Nth position in the A content and the B content is retained as the original segment,
by a storage device, storing the A content and the B content;
by a user device, requesting a CDN device to transmit the multimedia content;
by the CDN device, providing session information of the user device to an edge device;
by the edge device, generating a W watermark that enables identification of the user device based on the session information, retrieving the original segment at every cyclic Nth position from the storage device, inserting the W watermark into the retrieved segment at every cyclic Nth position, and encoding it into a W segment; and
by the CDN device, for the 1st to (N-1)th segments, retrieving and transmitting the A segment or the B segment from the storage device according to the order determined by the A/B watermarking scheme , and for the Nth segment, retrieving and transmitting the W segment from the edge device .

According to the system and method for providing real-time forensic watermarking using edge computing in a live streaming environment according to the present invention as configured above, it is possible to guarantee real-time feature in a VOD streaming environment and to implement the advantages of the existing A/B forensic watermarking scheme, which allows the combinations of various user information by a single encoding process, as is.

Further, even if some frames of video content to which forensic watermarking of the present invention is applied are leaked, if a frame containing the W watermark is detected, it becomes possible to identify the original distributor who possesses the session information contained in the W watermark of the frame. Therefore, the invention overcomes the drawbacks of the existing A/B forensic watermarking scheme vulnerable to collusion attacks and may have resistance against collusion attacks.

### Brief description of the drawings

FIG. 1 is a diagram illustrating a configuration of a system for providing real-time forensic watermarking using edge computing in a live streaming environment according to the present invention.
FIG. 2 schematically illustrates an original content, A content and B content according to the existing A/B watermarking scheme, preprocessed A content and B content according to the present invention, and multimedia content with W watermarking added according to the present invention.
FIG. 3 is a flowchart of a method for providing real-time forensic watermarking using edge computing in a live streaming environment according to the present invention.

### Detailed description of the invention

Hereinafter, a system and method for providing real-time forensic watermarking using edge computing in a live streaming environment according to the present invention will be described with reference to the drawings.

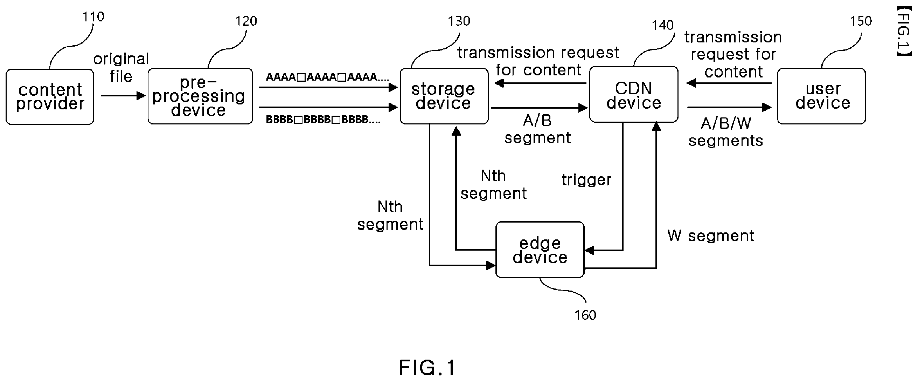

FIG. 1 is a diagram illustrating a configuration of a system for providing real-time forensic watermarking using edge computing in a live streaming environment according to the present invention. Referring to FIG. 1, a system for providing real-time forensic watermarking using edge computing in a live streaming environment according to the present invention may comprise a pre-processing device (120), a storage device (130), an edge device (160), a CDN device (140), and a user device (150).

The pre-processing device (also called A/B generator) (120) may receive an original multimedia content file and segments it according to predetermined criteria. Then, the pre-processing device may insert a watermark of A type (hereinafter referred to as 'A watermark') according to the A/B watermarking scheme into each segment, encode the each segment into an A segment, and combine the encoded A segments to generate an A content. Simultaneously, the pre-processing device (120) may insert a watermark of B type (hereinafter referred to as 'B watermark') according to the A/B watermarking scheme into the each segment of the original file, encode the each segment into a B segment, and combine the encoded B segments to generate a B content.

Alternatively, the pre-processing device (120) may receive an original multimedia content file, generate an A content by inserting an A watermark into the original file and segmenting it according to the predetermined criteria, and generate a B content by inserting a B watermark into the original file and segmenting it according to the criteria.

In particular, the pre-processing device (120) according to the present invention generates the A content and the B content by inserting the A watermark and the B watermark into each segment of the original file, respectively, but may not insert either the A watermark or the B watermark into each segment at every cyclic Nth position; therefore, every Nth segment is retained as the original segment (indicated as "□" in FIG. 1) in both the A content and the B content.

In the following description of the present invention, unless otherwise specified, the A content and B content or the pre-processed A content and B content mean content in which each segment at every cyclic Nth position is retained as the original segment.

Here, N may be determined with reference to the watermark encoding performance of at least some of the edge devices (160) included in the network distributing the multimedia content. The determined value of N may be shared by the pre-processing device (120), the edge device (160), and the CDN device (140).

For example, if a predetermined edge device (160) has a performance capable of watermark encoding at a speed of 0.25 times the video playback speed, N may be set to 5. As a result, for the 1st to 4th segments, pre-encoded segments stored in the storage device (130) may be transmitted, and the edge device (160) may be able to perform watermark encoding on the 5th segment while the above four segments are being transmitted. Then, when the time comes for the 5th segment to be transmitted, the segment encoded by the edge device (160) may be transmitted.

The storage device (130) stores the pre-processed A content and the pre-processed B content, generated by the pre-processing device (120), in which each segment at every cyclic Nth position is retained as the original content form.

Edge device (160) may receive unique information for a user device (150) requesting transmission of multimedia content, for example, session information, from the CDN device (140). The edge device (160) generates a W watermark enabling identification of the user device using the provided session information, retrieves Nth original segments at cyclic Nth position from the storage device (130), inserts the W watermark into the retrieved segment, and encodes it into a W segment.

Subsequently, the edge device (160) provides the W segment to the CDN device (140) at the time of transmitting the segment at cyclic Nth position, thereby allowing the W segment to be transmitted to the user device (150)

CDN (Content Delivery Network) device (140), upon receiving a transmission request from the user device (150) for multimedia content, retrieves the requested multimedia content from the storage device (130) and transmits it to the user device (150).

In particular, the CDN device (140) provides the session information of the user device (150) to the edge device (160), thereby preparing the edge device (160) to provide the W segment at every cyclic Nth position.

As such, the CDN device (140) retrieves A segments or B segments from the storage device (130) and transmits them to the user device (150) in accordance with a predetermined order determined by the A/B watermarking scheme, for each of the 1st to (N-1)th segments. For the Nth segment, the CDN device (140) retrieves the W segment encoded by the edge device (160) from the edge device (160) and transmits it to the user device (150).

User device (150) transmits a transmission request for multimedia content to be executed to the CDN device (140), and executes in real time the segments transmitted from the CDN device (140), thereby executing the multimedia content.

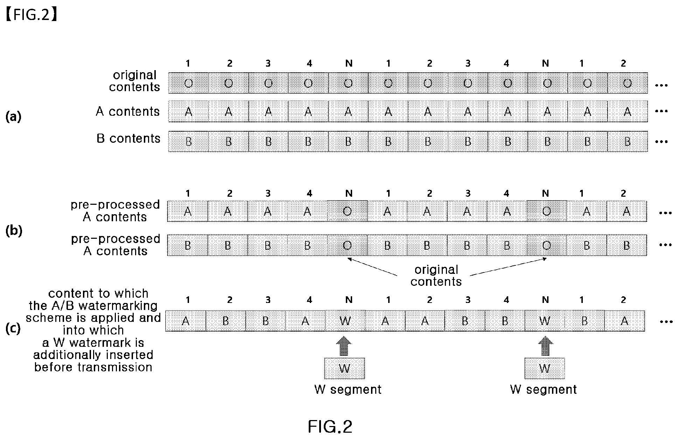

FIG. 2 schematically illustrates an original content, an A content and a B content according to the conventional A/B watermarking scheme, pre-processed A content and B content according to the present invention, and multimedia content with W watermarking added according to the present invention.

FIG. 2(a) illustrates examples of original content and the A content and the B content.

The original content corresponds to the original file without watermark insertion in each frame and/or data. Each block constituting each content in the figure may mean a segment grouping frames for a predetermined time period, or one block may correspond to one frame.

In the present invention, all segments may have the same number of frames. Therefore, A segments, B segments, original segments, and W segments may all have the same number of frames.

The original content may be divided into DASH or HLS segments for streaming. In the figure, segments of the original content are indicated by "O."

Each segment may be encoded into an A segment by inserting the A watermark of the A/B watermarking scheme into the each segment, and the A content is generated by combining the A segments

Meanwhile, each segment of the segmented original content may be encoded into a B segment by inserting the B watermark of the A/B watermarking scheme into the each segment, and B segments may be combined to generate the B content.

In the figure, A segments are indicated by "A" and B segments by "B."

FIG. 2(b) illustrates examples of the pre-processed A content and B content configured from original content, to be used in the system and method for providing real-time forensic watermarking using edge computing in a live streaming environment according to the present invention.

An A content may be generated by inserting an A watermark into each segment of original content. However, according to the present invention, a segment at a predetermined and cyclic position, namely the cyclic Nth position, may be retained as the original segment (O), while the A watermark is not inserted into the segment. Here, N may be, for example, "5".

Accordingly, the pre-processed A content, in which each segment at every cyclic Nth position is retained as the original segment, is generated, as illustrated.

Similarly, a B content is generated by inserting a B watermark into each segment of the original content, except that the B watermark is not inserted into segments at every cyclic Nth position.

Thus, the A content and the B content provided by the present invention are characterized in that each segment at every cyclic Nth position is identically retained as the original segment into which watermarks are not inserted.

FIG. 2(c) illustrates the form of multimedia content processed by the real-time forensic watermarking system and method according to an embodiment of the present invention, wherein the A/B watermarking scheme is applied to the multimedia content and the W watermarking is additionally inserted into the multimedia content, and then the multimedia content is transmitted in real time to the user device (150).

Since N=5, the W segment appears at every cyclic 5th position. Specifically, from the 1st to the 4th segments, A segments or B segments may be transmitted according to a predetermined order based on the A/B watermarking scheme. These A segments or B segments may be retrieved by the CDN device (140) from the storage device (130). However, for the 5th segment, the W segment generated by the edge device (160) is transmitted. The 5th segment (the original segment) is pre-retrieved and the W watermark is inserted into the 5th segment, by the edge device (160), while the 1st to 4th segments are being transmitted.

Subsequently, for the next 1st to 4th segments, A segments or B segments may continuously be transmitted according to the predetermined order based on the A/B watermarking scheme. Then, the next W segment is transmitted for the next 5th segment. The next W segment also corresponds to a segment generated by the edge device by inserting the W watermark into the segment while said next 1st to 4th segments are being transmitted.

According to this watermarking method, the existing A/B watermarking scheme may be utilized as is for the 1st to the (N-1)th segments, and additionally, the W watermark may be inserted. Therefore, by combining the two watermarking methods, an enhanced forensic watermarking scheme may be provided.

Also, since the W segment is transmitted after a plurality of A/B segments are transmitted, the edge device (160) may secure encoding time to insert watermarks.

Depending on the performance of the edge device included in the multimedia content delivery network, the value of N may be adjusted to be longer or shorter.

Meanwhile, as another embodiment of the real-time forensic watermarking system and method according to the present invention, even if N is already fixed to a specific number, the method allowing the edge device to adjust N may be considered.

As an example, it is assumed that N= 5 and that the time required by the edge device (160) to encode one segment into a W segment corresponds to the period during which 5 to 9 segments are executed. In this case, the edge device cannot complete the encoding process for generating a W segment by the time the 5th segment is to be transmitted. Accordingly, the edge device (160) may transmit the original segment as is for a 5th segment, encode the original segment at 10th position into the W segment, and transmit the W segment at the time of transmitting the 10th segment.

Alternatively, in this case, the edge device (160) may notify the CDN device (140) that it may provide the W segment only for cyclic 10th segment. Then, the CDN device (140) may transmit A or B segments for the 1st to 4th segments, transmit the original segment for the 5th segment, transmit A or B segments for the 6th to 9th segments, and transmit the W segment provided from the edge device (160) for the 10th segment.

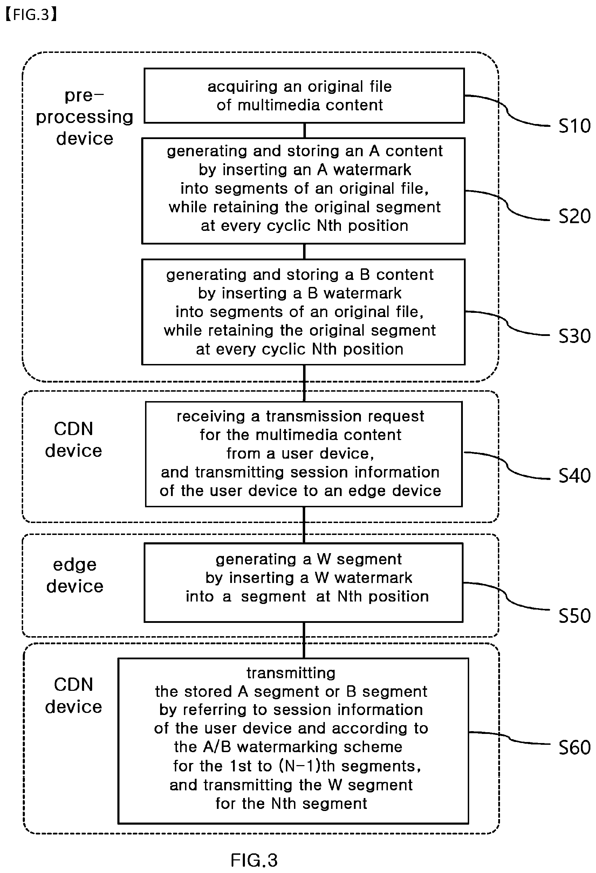

FIG. 3 is a flowchart of a method for providing real-time forensic watermarking using edge computing in a live streaming environment according to the present invention. The method is processed by the real-time forensic watermarking system as described above.

First, the pre-processing device (120) may acquire predetermined multimedia content from the content provider (110) (S10). The acquired multimedia content is designated as the original file. Then, this original file is segmented and encoded into the A content by inserting the A watermark and is also segmented and encoded into the B content by inserting the B watermark, for use in the A/B watermarking scheme (S20, S30). The encoded A content and B content are stored in the storage device (130).

Thereafter, when a user intends to play the multimedia content through their user device (150), the user device (150) transmits a transmission request for the multimedia content to the CDN device (140).

The CDN device (140), upon receiving the transmission request from the user device (150), acquires unique information (or session information) of the user device (150), and transmits the acquired unique information to the edge device (160) (S40).

The edge device (160) generates the W watermark for the user device (150) based on the unique information. Then, the edge device retrieves the segment at cyclic Nth position of the multimedia content, inserts the W watermark into the retrieved segments at the cyclic Nth position, and encodes it into the W segments (S50).

Meanwhile, the CDN device (140) determines an order of A segments and B segments for the user device (150) based on the A/B watermarking scheme by using the unique information, and, for the 1st to (N-1)th segments, retrieves corresponding segments from the storage device

(130) according to the determined order, and, transmits them to the user device, and for the Nth segment, retrieves the W segment generated by the edge device (160) and transmits it to the user device (S60).

Through this configuration, by extracting the A watermark and B watermark from the transmitted segments and identifying their order, unique information of the user device (150) may be identified.

Meanwhile, the W watermark may include any predetermined information generated from the session information, or may be information which indicates the order of A segments and B segments determined by the unique information based on the A/B watermarking scheme.

That is, the W watermark transmitted within every Nth segment may include information related to the order in which A segments and B segments from the 1st to (N-1)th are arranged. In this case, the unique information of the user device (150) may be identified by extracting the W watermark from just one segment. For example, in FIG. 2(c), the W watermark may include information indicating the order "ABBA."

According to the method for providing real-time forensic watermarking using edge computing in a live streaming environment according to the present invention configured as above, the existing A/B watermarking scheme may be utilized as is, and by additionally inserting the W watermark, it is possible to resist to collusion attacks aimed at damaging the A/B watermarking scheme.

Furthermore, even in systems employing edge devices with low video encoding performance for watermark insertion, sufficient time to encode the watermark into the video may be provided for the edge device. Therefore, the real-time forensic watermarking providing method may be implemented using low-performance and cost-effective edge devices.

Moreover, since the W watermark insertion time may be adjusted by changing the value of N, processing methods requiring large computations such as DCT, DWT, DTCWT may be used even with low-performance edge devices.

## Claims

1. A system for providing real-time forensic watermarking using edge computing in a live streaming environment, the system comprising:
- a pre-processing device configured to:
receive original segments of multimedia content;
insert an A watermark and a B watermark according to an A/B watermarking scheme into each of the original segments; and
generate an A content composed of only A segments and a B content composed of only B segments, wherein, in both the A content and the B content, a segment at every cyclic Nth position is retained as the original segment;
- a storage device configured to store the A content and the B content;
- an edge device configured to:
generate a W watermark that enables identification of a specific user device using predetermined session information;
retrieve each segment at every cyclic Nth position from the storage device; and
insert the W watermark into the retrieved segments at every cyclic Nth position to encode it into a W segment;
- a content delivery network (CDN) device configured to:
provide the session information of the user device to the edge device upon receiving a transmission request for the multimedia content from the user device; for the 1st to (N-1)th segments, retrieve and transmit the A segment or the B segment from the storage device according to the order determined by the A/B watermarking scheme; and, for the Nth segment, retrieve and transmit the W segment from the edge device; and
- a user device configured to:
send the transmission request for the multimedia content to the CDN device; and
execute the multimedia content composed of segments transmitted from the CDN device.

2. The system according to claim 1,
wherein the value N is determined with reference to watermark encoding performance of at least some of the edge devices in the multimedia content distribution network, and is shared by at least the pre-processing device, the CDN device, and the edge device.

3. The system according to claim 1,
wherein the multimedia content comprises video content that is configurable in units of frames;
wherein each segment comprises frames corresponding to 1 to 3 seconds of the video content; and
wherein the number of frames constituting the A segment, the number of frames constituting the B segment, and the number of frames constituting the W segment are equal to each other.

4. The system according to claim 1,
wherein the W watermark is configured to enable identification of the session information of the user device by means of any one frame constituting the W segment.

5. The system according to claim 1,
wherein the W watermark transmitted at every Nth order comprises information related to the order of the A segments and the B segments at the 1st to (N-1)th positions.

6. A method for providing a real-time forensic watermarking using edge computing in a live streaming environment, performed by the real-time forensic watermarking providing system according to claim 1, comprising the steps of:
by a pre-processing device, receiving original segments of multimedia content, inserting an A watermark according to an A/B watermarking scheme into each of the original segments, generating an A content composed of only A segments, inserting a B watermark according to the A/B watermarking scheme into each of the original segments, and generating a B content composed of only B segments, wherein each segment at every cyclic Nth position in both the A content and the B content is retained as the original segment;
by a storage device, storing the A content and the B content;
by a user device, requesting a content delivery network (CDN) device to transmit the multimedia content;
by the CDN device, providing session information of the user device to an edge device;
by the edge device, generating a W watermark that enables identification of the user device using the session information, retrieving the original segment at every cyclic Nth position from the storage device, inserting the W watermark into the retrieved segment at every cyclic Nth position, and encoding it into a W segment; and
by the CDN device, for the 1st to (N-1)th segments, retrieving and transmitting the A segment or the B segment from the storage device according to the order determined by the A/B watermarking scheme, and, for the Nth segment, retrieving and transmitting the W segment from the edge device.
